(19) Europäisches Patentamt / European Patent Office / Office européen des brevets

(11) **EP 1 818 186 A1**

(12) **EUROPEAN PATENT APPLICATION**
published in accordance with Art. 158(3) EPC

(43) Date of publication:
**15.08.2007 Bulletin 2007/33**

(51) Int Cl.:
*B60C 1/00* (2006.01)   *C08L 51/04* (2006.01)
*C08L 7/02* (2006.01)

(21) Application number: **05806788.5**

(22) Date of filing: **18.11.2005**

(86) International application number:
**PCT/JP2005/021251**

(87) International publication number:
**WO 2006/059503 (08.06.2006 Gazette 2006/23)**

(84) Designated Contracting States:
**DE ES FR GB IT**

(30) Priority: **30.11.2004 JP 2004346507**
**30.11.2004 JP 2004346506**

(71) Applicant: **Bridgestone Corporation**
**Tokyo 104-8340 (JP)**

(72) Inventors:
• **HATTORI, Kenichi**
**Techn. Center, Bridgestone Corp.**
**Kodaira-shi**
**Tokyo**
**1870031 (JP)**

• **MITSUI, Kentarou**
**Techn. Center, Bridgestone Corp.**
**Kodaira-shi**
**Tokyo**
**1870031 (JP)**
• **KUSANO, Tomohiro**
**Techn. Center, Bridgestone Corp.**
**Kodaira-shi**
**Tokyo**
**1870031 (JP)**

(74) Representative: **Whalley, Kevin**
**Marks & Clerk**
**90 Long Acre**
**London WC2E 9RA (GB)**

(54) **PNEUMATIC TIRE**

(57)    A pneumatic tire which offers extremely excellent durability through inclusion of a belt portion composed of a rubber composition having excellent reinforcing properties, high hardness, low heat build-up properties, excellent deterioration resistance, and excellent adhesiveness to steel cords, wherein the rubber composition contains a natural rubber prepared by graft polymerizing a natural rubber latex with a polar group-containing monomer, and solidifying and drying the resulting product. A pneumatic tire which offers excellent rolling resistance through inclusion of a ply coating rubber, squeegee rubber, or tie rubber composed of a rubber composition containing a modified natural rubber prepared by graft polymerizing a natural rubber latex with a polar group-containing monomer, and solidifying and drying the resulting product.

**Description**

Technical Field

The present invention relates to a pneumatic tire.

Background Art

Rubbers constituting the steel belt portion of pneumatic tires are important rubbers involved in the durability of the tires, and are demanded to have, for example, the following properties:

(1) reinforcing properties;
(2) hardness;
(3) low heat build-up properties;
(4) deterioration resistance; and
(5) adhesiveness to steel cords.
The enhancement of reinforcing properties listed as

(1) is effective for suppressing crack growth from the belt end (steel cord end) caused by interlayer shear deformation between belts. The improvement of hardness listed as (2) is effective for suppressing interlayer shear deformation between belts, and improvement of low heat build-up properties listed as (3) is effective for improving durability through, for example, prevention of interfacial separation between the tread and belt, and suppression of deterioration.

Heretofore, natural rubber (NR) has been used as a rubber for the belt portion, and has been treated to improve the above properties through, for example,

(a) increasing the loading of a filler such as carbon black;
(b) adding a curing agent such as a resin;
(c) increasing the loading of a crosslinking agent such as sulfur; and
(d) increasing the loading of a vulcanization accelerator.
However, it has been very difficult to improve all the properties listed as (1) to (5).

More specifically, increasing the loading of carbon black as described in (a) enhances the reinforcing properties, but simultaneously tends to deteriorate the heat build-up properties, thereby worsening the heat durability. Also, adding a resin as described in (b) increases the hardness, but tends to deteriorate the heat build-up properties to worsen the heat durability. Increasing the loading of sulfur as described in (c) causes blooming of sulfur if the rubber is left in the unvulcanized state, which results in significant deterioration of the processability, such as a decrease in tackiness. Besides, the deterioration resistance of a tire decreases, and thus the durability may decrease even though the hardness increases. Increasing the loading of a vulcanization accelerator as described in (d) will not cause problems in the processability, low heat build-up properties, and deterioration resistance, but if added in a large amount, adhesiveness to steel cords is inhibited, which results in the deterioration of the adhesion durability.

There are other problems in that all the measures (a) to (d) increase the viscosity of rubber compositions thereby decreasing the processability thereof.

In recent years, pneumatic tires have been demanded to have improved low rolling resistance.

Among various rubber materials, natural rubber is regarded as a material having excellent fracture resistance, and thus has been used mainly as a casing member. However, different from synthetic rubbers such as styrene-butadiene copolymer rubber or polybutadiene rubber which can be terminally modified to reduce losses, to date, there has been no known technique for improving rubber components of natural rubber to reduce losses. Accordingly, it has been impossible to significantly reduce rolling resistance of casing rubber.

On the other hand, known methods such as a method of decreasing the amount of a filler such as carbon black, or a method of downgrading carbon black can reduce losses, but simultaneously decreases fracture resistance, which results in failure to maintain durability, which is a necessary performance as casing rubber.

Therefore, it is desired to develop a natural rubber composition capable of reducing rolling resistance while maintaining fracture resistance.

Disclosure of Invention

A first object of the present invention is to provide a pneumatic tire which offers extremely excellent durability through inclusion of a belt portion composed of a rubber composition which solves the above-described problems of the related art, and has excellent reinforcing properties, high hardness, low heat build-up properties, excellent deterioration resistance, and excellent adhesiveness to steel cords.

A pneumatic tire according to a first aspect of the present invention includes a belt portion composed of a rubber composition containing a modified natural rubber prepared by graft polymerizing a natural rubber latex with a polar group-containing monomer, and solidifying and drying the resulting product.

When the belt portion such as one composed of a belt coating rubber contains a modified natural rubber prepared by graft polymerizing a natural rubber latex with a polar group-containing monomer, and solidifying and drying the resulting product as a rubber component, the reinforcing properties are enhanced while the heat build-up properties are markedly suppressed, thereby the deterioration resistance and crack growth resistance are improved, simultaneously processability is also improved, and the belt portion is formed without impairment of adhesiveness to steel cords, which allows a pneumatic tire having extremely excellent durability to be provided.

These effects are considered to occur due to the following mechanisms: the modified natural rubber improves low loss properties and reduces heat generation contributing the deterioration during running, thereby the progress of deterioration is suppressed, and besides, the modified natural rubber allows a filler such as carbon black to actively interact with the rubber, which improves the reinforcing properties and crack growth resistance.

The region to which the rubber composition containing a modified natural rubber is applied is preferably composed of one or two or more rubbers selected from the group consisting of belt coating rubber, belt end rubber, and inter-belt rubber of the belt portion.

A second object of the present invention is to provide a pneumatic tire which offers excellent low rolling resistance without impairment of durability through inclusion of a ply coating rubber, squeegee rubber, or tie rubber having improved rubber properties.

A pneumatic tire according to a second aspect of the present invention includes a ply coating rubber composed of a rubber composition containing a modified natural rubber prepared by graft polymerizing a natural rubber latex with a polar group-containing monomer, and solidifying and drying the resulting product.

A pneumatic tire according to a third aspect of the present invention includes a squeegee rubber composed of a rubber composition containing a modified natural rubber- prepared by graft polymerizing a natural rubber latex with a polar group-containing monomer, and solidifying and drying the resulting product.

A pneumatic tire according to a fourth aspect of the present invention includes a tie rubber composed of a rubber composition containing a modified natural rubber prepared by graft polymerizing a natural rubber latex with a polar group-containing monomer, and solidifying and drying the resulting product.

When the rubber composition contains a modified natural rubber prepared by graft polymerizing a natural rubber latex with a polar group-containing monomer, and solidifying and drying the resulting product as a rubber component, a rubber composition which offers low loss properties and low rolling resistance while maintaining sufficient fracture resistance is obtained. Accordingly, through the use of the rubber composition in the ply coating rubber, squeegee rubber, or tie rubber of a pneumatic tire, a pneumatic tire having excellent low rolling resistance and excellent durability is obtained.

Best Mode for Carrying Out the Invention

The modified natural rubber contained in the rubber composition is described below.

The modified natural rubber is prepared by graft polymerizing a natural rubber latex with a polar group-containing monomer, and solidifying and drying the resulting product.

The natural rubber latex is a common latex, and examples thereof include a field latex, an ammonia-treated latex, a centrifugally concentrated latex, a deproteinized latex treated with a surfactant or enzyme, and combinations thereof.

The polar group-containing monomer is not particularly limited as long as it is a monomer containing within the molecule thereof at least one polar group. Specific examples of the polar group contained in the polar group-containing monomer include an amino group, an imino group, a nitrile group, an ammonium group, an imide group, an amide group, a hydrazo group, an azo group, a diazo group, a hydroxyl group, a carboxyl group, a carbonyl group, an epoxy group, an oxycarbonyl group, a sulfide group, a disulfide group, a sulfonyl group, a sulfinyl group, a thiocarbonyl group, a nitrogen-containing heterocyclic group, an oxygen-containing heterocyclic group, an alkoxysilyl group, and a tin-containing group. These polar group-containing monomers may be used alone or in combination of two or more of them. The polar group-containing monomer may contain one or two or more of these polar groups.

Specific examples of the polar group-containing monomer are listed below.

Examples of the amino group-containing monomers include polymerizable monomers having within the molecule thereof at least one amino group selected from primary, secondary, and tertiary amino groups. Among them, tertiary amino group-containing monomer such as dialkylaminoalkyl (meth)acrylate is particularly preferable. In the present description, "(meth)acryl" means "acryl or methacryl", and "(meth)acrylate" means "acrylate or methacrylate".

Examples of the primary amino group-containing monomer include acrylamide, methacrylamide, 4-vinylaniline, aminomethyl (meth)acrylate, aminoethyl (meth)acrylate, aminopropyl (meth)acrylate, and aminobutyl (meth)acrylate.

Examples of the secondary amino group-containing monomer include:

(1) anilinostyrenes such as anilinostyrene, β-phenyl-p-anilinostyrene, β-cyano-p-anilinostyrene, β-cyano-β-methyl-p-anilinostyrene, β-chloro-p-anilinostyrene, β-carboxy-p-anilinostyrene, β-methoxycarbonyl-p-anilinostyrene, β-(2-hydroxyethoxy)carbonyl-p-anilinostyrene, β-formyl-p-anilinostyrene, β-formyl-β-methyl-p-anilinostyrene, and α-carboxy-β-carboxy-β-phenyl-p-anilinostyrene;

(2) anilinophenylbutadienes such as anilinophenyl butadiene, 1-anilinophenyl-1,3-butadiene, 1-anilinophenyl-3-methyl-1,3-butadiene, 1-anilinophenyl-3-chloro-1,3-butadiene, 3-anilinophenyl-2-methyl-1,3-butadiene, 1-anilinophenyl-2-chloro-1,3-butadiene, 2-anilinophenyl-1,3-butadiene, 2-anilinophenyl-3-methyl-1,3-butadiene, and 2-anilinophenyl-3-chloro-1,3-butadiene; and

(3) N-monosubstituted (meth)acrylamides such as N-methyl(meth)acrylamide, N-ethyl(meth)acrylamide, N-methylol acrylamide, and N-(4-anilinophenyl) methacrylamide.

Examples of the tertiary amino group-containing monomer include N,N-disubstituted aminoalkyl acrylate, N,N-disubstituted aminoalkyl acrylamide, and vinyl compounds containing a pyridyl group.

Examples of the N,N-disubstituted aminoalkyl acrylate include esters of acrylic acid or methacrylic acid such as N,N-dimethylaminomethyl (meth)acrylate, N,N-dimethylaminoethyl (meth)acrylate, N,N-dimethylaminopropyl (meth)acrylate, N,N-dimethylaminobutyl (meth)acrylate, N,N-diethylaminoethyl (meth)acrylate, N,N-diethylaminopropyl (meth)acrylate, N,N-diethylaminobutyl (meth)acrylate, N-methyl-N-ethylaminoethyl (meth)acrylate, N,N-dipropylaminoethyl (meth)acrylate, N,N-dibutylaminoethyl (meth)acrylate, N,N-dibutylaminopropyl (meth)acrylate, N,N-dibutylaminobutyl (meth)acrylate, N,N-dihexylaminoethyl (meth)acrylate, N,N-dioctylaminoethyl (meth)acrylate, and acryloyl morpholine. Particularly preferable examples include N,N-dimethylaminoethyl (meth)acrylate, N,N-diethylaminoethyl (meth)acrylate, N,N-dipropylaminoethyl (meth)acrylate, N,N-dioctylaminoethyl (meth)acrylate, and N-methyl-N-ethylaminoethyl (meth)acrylate.

Examples of the N,N-disubstituted aminoalkyl acrylamide include acrylamide compounds or methacrylamide compounds such as N,N-dimethylaminomethyl (meth)acrylamide, N,N-dimethylaminoethyl (meth)acrylamide, N,N-dimethylaminopropyl (meth)acrylamide, N,N-dimethylaminobutyl (meth)acrylamide, N,N-diethylaminoethyl (meth)acrylamide, N,N-diethylaminopropyl (meth)acrylamide, N,N-diethylaminobutyl (meth)acrylamide, N-methyl-N-ethylaminoethyl (meth)acrylamide, N,N-dipropylaminoethyl (meth)acrylamide, N,N-dibutylaminoethyl (meth)acrylamide, N,N-dibutylaminopropyl (meth)acrylamide, N,N-dibutylaminobutyl (meth)acrylamide, N,N-dihexylaminoethyl (meth)acrylamide, N,N-dihexylaminopropyl (meth)acrylamide, and N,N-dioctylaminopropyl (meth)acrylamide. Among them, particularly preferable examples include N,N-dimethylaminopropyl (meth)acrylamide, N,N-diethylaminopropyl (meth)acrylamide, and N,N-dioctylaminopropyl (meth)acrylamide.

Examples of the pyridyl group-containing vinyl compound include 2-vinyl pyridine, 3-vinyl pyridine, 4-vinyl pyridine, 5-methyl-2-vinyl pyridine, and 5-ethyl-2-vinyl pyridine. Among them, particularly preferable examples include 2-vinyl pyridine and 4-vinyl pyridine.

Examples of the nitrogen-containing heterocycle of the monomer having a nitrogen-containing heterocyclic group include pyrrole, histidine, imidazole, triazolidine, triazole, triazine, pyridine, pyrimidine, pyrazine, indole, quinoline, prine, phenazine, pteridine, and melamine. The nitrogen-containing heterocycle may contain other hetero atoms within the ring thereof.

Examples of the nitrile group-containing monomer include (meth)acrylonitrile and vinylidene cyanide.

Examples of the hydroxyl group-containing monomer include polymerizable monomers having within one molecule thereof at least one of each of primary, secondary and tertiary hydroxyl groups. Examples of the monomer include hydroxyl group-containing unsaturated carboxylic acid-based monomers, hydroxyl group-containing vinyl ether-based monomers, and hydroxyl group-containing vinyl ketone-based monomers. Specific examples of the hydroxyl group-containing monomers include hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, and 4-hydroxybutyl (meth)acrylate; mono(meth)acrylates of polyalkylene glycol (having, for example, 2 to 23 alkylene glycol units) such as polyethylene glycol and polypropylene glycol; hydroxyl group-containing unsaturated amides such as N-hydroxymethyl (meth)acrylamide, N-(2-hydroxyethyl) (meth)acrylamide, and N,N-bis(2-hydroxymethyl) (meth)acrylamide; hydroxyl group-containing vinyl aromatic compounds such as o-hydroxystyrene, m-hydroxystyrene, p-hydroxystyrene, o-hydroxy-α-methylstyrene, m-hydroxy-α-methylstyrene, p-hydroxy-α-methylstyrene, and p-vinylbenzyl alcohol; and (meth)acrylates. Among them, hydroxyl group-containing unsaturated carboxylic acid-based monomers, hydroxyalkyl (meth)acrylates, hydroxyl group-containing vinyl aromatic compounds are preferable, and hydroxyl group-containing unsaturated carboxylic acid-based monomers are particularly preferable. Preferable examples of the hydroxyl group-containing unsaturated carboxylic acid-based monomer include derivatives of acrylic acid, methacrylic acid, itaconic acid, fumaric acid, and maleic acid such as esters, amides, and anhydrides thereof, and particularly preferable examples include ester compounds of acrylic acid and methacrylic acid.

Examples of the carboxyl group-containing monomer include unsaturated carboxylic acids such as (meth) acrylic acid, maleic acid, fumaric acid, itaconic acid, tetraconic acid, and cinnamic acid; and free carboxyl group-containing esters and salts thereof such as monoesters of nonpolymerizable polyvalent carboxylic acids such as phthalic acid, succinic acid, and adipic acid and hydroxy group-containing unsaturated compounds such as (meth)allyl alcohol and 2-hydroxyethyl (meth)acrylate. Among them, unsaturated carboxylic acids are particularly preferable.

Examples of the epoxy group-containing monomer include (meth)allyl glycidyl ether, glycidyl (meth)acrylate, and 3,4-oxycyclohexyl (meth)acrylate.

Examples of the alkoxysilyl group-containing monomer include (meth)acryloxymethyltrimethoxysilane, (meth) acryloxymethylmethyldimethoxysilane, (meth)acryloxymethyldimethylmethoxysilane, (meth)acryloxymethyltriethoxysilane, (meth)acryloxymethylmethyldiethoxysilane, (meth)acryloxymethyldimethylethoxysilane, (meth)acryloxymethyltripropoxysilane, (meth)acryloxymethylmethyldipropoxysilane, (meth)acryloxymethyldimethylpropoxysilane, γ-(meth) acryloxypropyltrimethoxysilane, γ-(meth) acryloxypropylmethyldimethoxysilane, γ-(meth) acryloxypropyldimethylmethoxysilane, γ-(meth) acryloxypropyltriethoxysilane, γ-(meth) acryloxypropylmethyldiethoxysilane, γ-(meth) acryloxypropyldimethylethoxysilane, γ-(meth) acryloxypropyltripropoxysilane, γ-(meth) acryloxypropylmethyldipropoxysilane, γ-(meth) acryloxypropyldimethylpropoxysilane, γ-(meth) acryloxypropylmethyldiphenoxysilane, γ-(meth) acryloxypropyldimethylphenoxysilane, γ-(meth) acryloxypropylmethyldibenzyloxysilane, γ-(meth)acryloxypropyl dimethylbenzyloxysilane, trimethoxyvinylsilane, triethoxyvinylsilane, 6-trimethoxysilyl-1,2-hexene, and p-trimethoxysilyl styrene.

Examples of the tin-containing monomer include allyltri-N-butyltin, allyltrimethyltin, allyltriphenyltin, allyltri-N-octyltin, (meth)acryloxy-N-butyltin, (meth)acryloxytrimethyltin, (meth)acryloxytriphenyltin, (meth)acryloxy-N-octyltin, vinyltri-N-butyltin, vinyltrimethyltin, vinyltriphenyltin, and vinyltri-N-octyltin.

The modified natural rubber is prepared, for example, as follows: a polar group-containing monomer is added to a natural rubber latex, and an initiator for graft polymerization is added thereto, thereafter emulsion polymerization is performed, subsequently the resulting polymer is solidified and dried.

The initiator for graft polymerization is not particularly limited, and examples thereof include various initiators such as emulsion polymerization initiators. The method for adding the initiator is also not particularly limited. Examples of commonly used initiators include benzoyl peroxide, hydrogen peroxide, cumene hydroperoxide, tert-butylhydroperoxide, di-tert-butylperoxide, 2,2-azobisisobutyronitrile, 2,2-azobis(2-diaminopropane)hydrochloride, 2,2-azobis (2-diaminopropane)dihydrochloride, 2,2-azobis(2,4-dimethylvaleronitrile), potassium persulfate, sodium persulfate, and ammonium persulfate. To decrease the polymerization temperature, it is preferable to use a redox polymerization initiator. Examples of reducing agents combined with a peroxide to be used as a redox polymerization initiator include tetraethylene pentamine, mercaptans, acidic sodium sulfite, reducing metal ions, and ascorbic acid. In particular, a combination of tert-butyl hydroperoxide and tetraethylene pentamine is preferable as a redox polymerization initiator.

The graft polymerization may be common emulsion polymerization in which the above-described polar group-containing monomer is added to a natural rubber latex, and polymerized under stirring at a predetermined temperature. The polar group-containing monomer may be mixed with water and an emulsifying agent, thoroughly emulsified, and then added to a natural rubber latex, or the polar group-containing monomer may be directly added to a natural rubber latex, and as necessary an emulsifying agent may be added thereto before or after the addition of the monomer.

The emulsifying agent is not particularly limited, and examples thereof include nonionic surfactants such as polyoxyethylene lauryl ether.

For the sake of effectively achieving the effect of the present invention without impairment of the processability of the rubber composition mixed with carbon black or silica, it is important that a small amount of polar group is uniformly introduced into natural rubber molecules, and thus the amount of the polymerization initiator to be added is preferably 1 to 100 mol%, and more preferably 10 to 100 mol% with reference to 100 moles of the polar group-containing monomer.

The modified natural rubber is prepared as follows: the above-described ingredients are charged into a reaction vessel, and allowed to undergo graft polymerization at 30 to 80°C for 10 minutes to 7 hours to form a modified natural rubber latex; the modified natural rubber latex is solidified, washed, and dried with a dryer such as a vacuum dryer, air dryer, or drum dryer to form a modified natural rubber.

The graft content of the polar group-containing monomer is preferably 0.01 to 5.0% by weight, more preferably 0.1 to 3.0% by weight, and particularly preferably 0.2 to 1.0% by weight with reference to the rubber content of the natural rubber latex. If the graft content of the polar group-containing monomer is less than 0.01% by weight, the effect of the present invention through the inclusion of the modified natural rubber cannot be sufficiently achieved, and if exceeding 5.0% by weight, excellent properties intrinsic to natural rubber, such as viscoelasticity and S-S characteristics (stress-strain curve determined with a tensile testing machine) may be impaired, and the processability may decrease.

The rubber composition contains the modified natural rubber as a rubber component at an amount of preferably 10% by weight or more, more preferably 40% by weight or more, even more preferably 60% by weight or more, even further preferably 60 to 100% by weight, and particularly prefearbly 80 to 100% by weight. If the content of the modified natural rubber is below the lowest limit, the effect of the present invention through the inclusion of the modified natural rubber cannot be sufficiently achieved.

Examples of another rubber component combined with the modified natural rubber include common natural rubber and diene-based synthetic rubbers. Examples of the diene-based synthetic rubbers include styrene-butadiene copolymer (SBR), polybutadiene (BR), polyisoprene (IR), butyl rubber (IIR), and ethylene-propylene copolymer. These other rubber components may be used alone, or in combination of two or more of them.

The rubber composition may contain, as a rubber component, 30 to 60% by weight of the modified natural rubber and 10 to 30% by weight of a diene-based synthetic rubber such as SBR or BR, and thereby achieves a good balance between favorable low heat build-up properties and high fracture resistance.

The rubber composition preferably contains carbon black as a filler. The loading of carbon black is preferably 30 to 120 parts by weight with reference to 100 parts by weight of the rubber component in the rubber composition. If the loading is less than 30 parts by weight, the reinforcing properties and other physical properties cannot be sufficiently improved by the addition of carbon black, and if exceeding 120 parts by weight, the processability decreases.

The carbon black may be any commercial carbon black, and particularly preferably carbon black of the SAF, ISAF, HAF, FEF, or GPF grade. Particularly preferable is carbon black offering a DBP absorption of $110 \times 10^{-5} m^3/kg$ or more and a nitrogen adsorption specific surface area of $140 \times 10^3 \, m^2/kg$ or more.

When the rubber composition contains carbon black, the heat build-up properties thereof can be improved through substitution of silica for a portion of the composition, for example, 2 to 50 parts by weight, particularly 10 to 30 parts by weight of silica for 100 parts by weight of the rubber component. The silica may be any commercial silica, and is particularly preferably wet process silica, dry process silica, or colloidal silica. The BET specific surface area of the silica is preferably 150 $m^2$/g or more, more preferably 170 $m^2$/g or more, and particularly preferably 190 $m^2$/g or more. Such silica may be a commercial product such as "NIPSIL AQ" or "NIPSIL KQ" manufactured by Tosoh Silica Corporation.

Carbon black and silica may each be used alone, or in combination of two or more of them.

When the rubber composition contains silica, the modified natural rubber is preferably a modified natural rubber prepared by graft polymerizing an alkoxysilyl group-containing monomer for achieving a strong bond between silica and the modified natural rubber to offer excellent formulation effect through the interaction between silica and the modified natural rubber.

The rubber composition may contain, as appropriate and necessary, formulation ingredients usually used in the rubber industry, for example, other reinforcing filler, vulcanizing agent, vulcanization accelerator, antioxidant, and softening agent according to the intended use.

The pneumatic tire according to the first aspect of the present invention includes a belt portion, which preferably includes one or two or more selected from the group consisting of a belt coating rubber, belt end rubber, and inter-belt rubber, composed of the above-described rubber composition containing a modified natural rubber. The pneumatic tire according to the first aspect may have the same structure as known pneumatic tires except that the belt portion is composed of a rubber composition containing the above-described modified natural rubber. The method for making the pneumatic tire is not particularly limited, and may follow a known procedure.

The pneumatic tire according to any of the second to fourth aspects of the present invention includes a ply coating rubber, squeegee rubber, or tie rubber composed of the above-described rubber composition containing a modified natural rubber. In the pneumatic tire, one of the ply coating rubber, squeegee rubber, and tie rubber may be composed of the rubber composition, or two or all of them may be composed of the rubber composition. The pneumatic tire may have the same structure as known pneumatic tires except that the ply coating rubber, squeegee rubber, or tie rubber is composed of the rubber composition containing a modified natural rubber. The method for making the pneumatic tire is not particularly limited, and may follow a common procedure.

The pneumatic tire of the present invention is effectively applicable to various types of pneumatic tires including heavy duty pneumatic tires for buses, trucks, and airplanes, and motor vehicle tires for passenger cars and racing cars for motor sports (MS).

EXAMPLES

The first aspect of the present invention is further illustrated by the following Preparations, Examples, and Comparative Examples, but the first aspect is not limited to the following examples in a range within the scope thereof.

SYNTHETIC EXAMPLE 1: Method for preparing modified natural rubber

(1) Natural rubber latex modifying step

A field latex was centrifuged at a rotation speed of 7,500 rpm using a latex separator (manufactured by Saito Separator Limited.) to obtain a concentrated latex having a dry rubber content of 60%. 1,000 g of the concentrated latex was placed in a stainless steel reaction vessel provided with a stirrer and a temperature control jacket, to which a previously prepared emulsion of a mixture of 3.0 g of 4-vinylpyridine, 10 ml of water, and 90 mg of an emulsifying agent (EMULGEN 1108, manufactured by Kao Corporation) was added together with 990 ml of water, and the resulting mixture was stirred for 30 minutes under nitrogen purge. Subsequently, 1.2 g of tert-butylhydroperoxide and 1.2 g of tetraethylene pentamine as polymerization initiators were added, and the reaction was performed at 40°C for 30 minutes to obtain a modified natural rubber latex.

(2) Solidifying and drying steps

Subsequently, the pH was adjusted to 4.7 with formic acid to solidify the modified natural rubber latex. The resulting solid was treated five times with a scraper, passed through a shredder for crumbing, and dried with a hot-air dryer at 110°C for 210 minutes to obtain a modified natural rubber A. From the weight of the resulting modified natural rubber A, it was found that the conversion ratio of 4-vinylpyridine as a polar group-containing monomer was 100%. Further, the modified natural rubber was extracted with petroleum ether, and further extracted with a mixed solvent of acetone and methanol (2:1) to isolate homopolymer; no homopolymer was detected in the analysis of the extract, which indicates that 100% of the added monomer was introduced into the natural rubber molecules.

EXAMPLES 1 to 3, Comparative Examples 1 to 5

Rubber compositions having the formulations shown in Table 1 were subjected to the following evaluations, and the results are shown in Table 1.
The ingredients listed in Table 1 are described below.

[ Ingredients]

Natural rubber: RSS #4
Modified natural rubber: 0.5% 4-vinylpyridine-modified natural rubber prepared in SYNTHETIC EXAMPLE 1
Silica: "NIPSIL AQ" manufactured by Tosoh Silica Corporation Carbon black: N326 "Asahi #70L" manufactured by Asahi Carbon Co., Ltd.
Cobalt salt: "DICNATE NBC-II" manufactured by Dainippon Ink And Chemicals, Inc.
Vulcanization accelerator: "NOCCELER DZ" (N,N-dicyclohexyl-2-benzothiazolylsulfenamide manufactured by Ouchi Shinko Chemical Industrial Co., Ltd.)
Antioxidant: "NOCRAC NS-6" manufactured by Ouchi Shinko Chemical Industrial Co., Ltd.

[ Evaluation]

(1) Storage elastic modulus E' and loss factor tanδ

Measurements were conducted on a rubber composition vulcanized under vulcanization conditions at 160°C for 14 minutes using a spectrometer (dynamic viscoelasticity measuring testing machine), at an initial load of 160 g, a frequency of 52 Hz, a strain of 1%, and a measuring temperature of 25°C. The value was represented as an index on the basis that the case of Comparative Example 1 is 100. The larger the E' value, the higher and better the elastic modulus, and the lower the tanδ value, the lower the heat build-up properties.

(2) Breaking elongation retention after deterioration

A rubber composition vulcanized under vulcanization conditions at 160°C for 14 minutes was measured for breaking elongation in accordance with JIS K 6301-1995 (No. 3 test piece) before and after the deterioration test in which the composition was left standing for deterioration in air at 100°C for 24 hours, and the calculation was conducted using the following formula.

$$\text{Retention} = 100 \times (\text{breaking elongation after}$$

$$\text{deterioration}) / (\text{breaking elongation before deterioration})$$

The larger the value, the higher and better the deterioration resistance.

(3) Bloom after standing for 3 days

A rubber composition vulcanized under vulcanization conditions at 160°C for 14 minutes was left standing at 25°C for 3 days, thereafter the rubber surface was visually inspected and observed; those having negligible whiteness caused by a sulfur bloom were rated as "O", and those having white areas were rated as "Δ".

(4) Adhesiveness

Brass-plated steel cords (1 x 5 structure, element wire diameter: 0.225 mm) were deposited in parallel at intervals of 12.5 mm, and the steel cords were coated with a rubber composition from both sides to make a specimen, and the specimen was vulcanized under vulcanization conditions at 160°C for 10 minutes. The steel cords were pulled out in accordance with ASTM-D-2229, and the surface of the extracted cords was visually observed to determine the proportion of the regions coated with rubber.
The higher the value, the higher and better the adhesive force.

(5) Crack growth resistance

Dumbbell-shaped specimens were punched out of a rubber composition vulcanized under vulcanization conditions at 160°C for 10 minutes, and the specimens having formed a preliminary crack of 5 mm at the center thereof were mounted on a fatigue testing machine, and subjected to strokes at 7 Hz at a constant stress, a temperature of 80°C, and a chuck distance of 20 mm, and the number of cycles to a complete fracture was represented as an index, on the basis that the case of Comparative Example 1 is 100. The higher the value, the longer the life and better the crack growth resistance.
[ Table 1]

| | Example | Comparative Example | | | | Example | | | | |
|---|---|---|---|---|---|---|---|---|---|---|
| | | 1 | 2 | 3 | 4 | 1 | 2 | 3 | 4 | 5 |
| Rubber composition ingredients (parts by weight) | Natural rubber | – | – | – | – | 100.0 | 100.0 | 100.0 | 100.0 | 100.0 |
| | Modified natural rubber | 100.0 | 100.0 | 100.0 | 100.0 | – | – | – | – | – |
| | Silica | – | – | – | 30.0 | – | – | – | – | 30.0 |
| | Carbon black | 60.0 | 65.0 | 70.0 | 30.0 | 60.0 | 70.0 | 60.0 | 60.0 | 30.0 |
| | Cobalt salt | 1.0 | 1.0 | 1.0 | 1.0 | 1.0 | 1.0 | 1.0 | 1.0 | 1.0 |
| | Zinc oxide | 7.5 | 7.5 | 7.5 | 7.5 | 7.5 | 7.5 | 7.5 | 7.5 | 7.5 |
| | Vulcanization accelerator | 1.0 | 1.0 | 1.0 | 1.0 | 1.0 | 1.0 | 1.0 | 2.0 | 1.0 |
| | Sulfur | 6.0 | 6.0 | 5.5 | 5.5 | 6.0 | 6.0 | 8.0 | 6.0 | 6.0 |
| | Antioxidant | 3.5 | 3.5 | 3.5 | 3.5 | 3.5 | 3.5 | 3.5 | 3.5 | 3.5 |
| Evaluation results | Storage elastic modulus E' (index) | 95 | 101 | 110 | 105 | 100 | 120 | 132 | 125 | 110 |
| | Loss factor tan δ (index) | 71 | 82 | 90 | 84 | 100 | 122 | 94 | 95 | 97 |
| | Breaking elongation retention(%) | 51 | 55 | 60 | 58 | 43 | 45 | 31 | 49 | 44 |
| | Bloom after standing for 3 days | O | O | O | O | O | O | × | O | O |
| | Adhesiveness(%) | 90 | 95 | 90 | 85 | 90 | 95 | 95 | 45 | 70 |
| | Crack growth resistance (index) | 118 | 114 | 110 | 108 | 100 | 108 | 90 | 91 | 80 |

Table 1 indicates that the modified natural rubber-containing rubber compositions according to the present invention offered excellent deterioration resistance, adhesiveness to steel cords, crack growth and resistance while having low loss properties and low heat build-up properties. Accordingly, it is evident that a pneumatic tire with excellent durability is provided through the pneumatic tire of the present invention containing the rubber composition in the belt portion thereof.

The second to fourth aspects of the present invention are further illustrated with Preparations, Examples, and Comparative Examples, but the second to fourth aspects are not limited to the following examples in a range within the scope thereof.

SYNTHETIC EXAMPLE 2: Method for preparing modified natural rubber A

(1) Natural rubber latex modifying step

A field latex was centrifuged at a rotation speed of 7,500 rpm using a latex separator (manufactured by Saito Separator Limited.) to obtain a concentrated latex having a dry rubber content of 60%. 1,000 g of the concentrated latex was placed in a stainless steel-made reaction vessel provided with a stirrer and a temperature control jacket, to which a previously prepared emulsion of a mixture of 3.0 g of 2-vinylpyridine, 10 ml of water, and 90 mg of an emulsifying agent (EMULGEN 1108, manufactured by Kao Corporation) was added together with 990 ml of water, and stirred for 30 minutes under a nitrogen atmosphere. Subsequently, 1.2 g of tert-butylhydroperoxide and 1.2 g of tetraethylene pentamine as polymerization initiators were added, and reaction was conducted at 40°C for 30 minutes to obtain a modified natural rubber.

(2) Solidifying and drying steps

Subsequently, the pH was adjusted to 4.7 with formic acid to solidify the modified natural rubber latex. The resulting solid was treated five times with a scraper, passed through a shredder for crumbing, and dried with a hot-air dryer at 110°C for 210 minutes to obtain a modified natural rubber A. From the weight of the resulting modified natural rubber A, it was found that the conversion ratio of 2-vinylpyridine as a polar group-containing monomer was 100%. Further, the modified natural rubber was extracted with petroleum ether, and further extracted with a mixed solvent of acetone and methanol (2:1) to isolate homopolymer; no homopolymer was detected in the analysis of the extract, which indicates that 100% of the added monomer was introduced into the natural rubber molecules. Accordingly, the resulting modified natural rubber is a 0.5% 2-vinylpyridine-modified natural rubber.

SYNTHETIC EXAMPLE 3: Method for preparing modified natural rubber B

A 5% γ-methacryloxypropyltrimethoxysilane-modified natural rubber was obtained in the same manner as SYNTHETIC EXAMPLE 2, except that γ-methacryloxypropyltrimethoxysilane was used in place of 2-vinylpyridine.
EXAMPLES 4 to 6, COMPARATIVE EXAMPLES 6 to 9 Rubber compositions having the formulations shown in Table 2 were subjected to the following evaluations, and the results are shown in Table 2.
The ingredients listed in Table 2 are described below.

[Ingredients]

Natural rubber: RSS #4
Modified natural rubber A: 0.5% 2-vinylpyridine modified natural rubber prepared in SYNTHETIC EXAMPLE 2
Modified natural rubber B: 5% γ-methacryloxypropyltrimethoxysilane modified natural rubber prepared in SYNTHETIC EXAMPLE 3
SBR: #1500 ("JSR 1500Z" manufactured by JSR Corporation) Carbon black: N326 "Asahi #70L" manufactured by Asahi Carbon Co., Ltd.
Silica: "NIPSIL AQ" manufactured by Tosoh Silica Corporation Spindle oil: "DIANA PROCESS OIL NS-28" manufactured by demitsu Kosan Co., Ltd.
Stearic acid: "MXST-L" manufactured by Miyoshi Oil & Fat Co., Ltd.
Vulcanization accelerator: "SANCELER NS-G"(N(tert-butyl)-2-benzothiazole\sulfenamide) manufactured by Sanshin Chemical Industry Co., Ltd.

[ Evaluation]

(1) $ML_{1+4}$ (unvulcanized viscosity)

For evaluating the processability of the rubber compositions, unvulcanized rubber samples were kneaded together with a vulcanized ingredient and preheated at 130°C for 1 minute using "MOONY VISCOMETER SMV201" manufactured by Shimadzu Co., Ltd., and then the rotation of the rotor was started, and the value after a lapse of 4 minute was measured as $ML_{1+4}$. The higher the value, the higher the unvulcanized viscosity and lower the processability or productivity.

(2) Ultimate strength (fracture resistance)

A specimen vulcanized at 160°C for 20 minutes was measured in accordance with JIS K6251-1993 to determine the tensile strength at 23°C. The higher the value, the higher the fracture resistance.

(3) Crack growth resistance

Dumbbell-shaped specimens were punched out of a rubber composition vulcanized under vulcanization conditions at 160°C for 10 minutes, and the specimens having formed a preliminary crack of 5 mm at the center thereof were mounted on a fatigue testing machine, and subjected to strokes at 7 Hz at a constant stress, a temperature of 80°C, and a chuck distance of 20 mm, and the number of cycles necessary to a complete fracture was represented as an index on the basis that the case of Comparative Example 7 is 100. The higher the value, the longer the life and the better the crack growth resistance.

(4) Loss factor tanδ (dynamic viscoelasticity)

Measurements were conducted on a rubber composition vulcanized under vulcanization conditions at 160°C for 14 minutes using a spectrometer (dynamic viscoelasticity measuring testing machine), at an initial load of 160 g, a frequency of 50 Hz, a strain of 1%, and a measuring temperature of 23°C. The value was represented as an index on the basis that the case of Comparative Example 7 is 100. The larger the tanδ value, the lower the loss.

(5) Rolling resistance

A rubber composition was used as the ply coating rubber, and the rolling resistance of the tire (size: 185/70R14) was measured with a drum, and the value was represented as an index on the basis that the case of Comparative Example 7 is 100. The higher the value, the better the rolling resistance and the better the low rolling resistance.
[ Table 2]

| Example | | Comparative Example | | | Example | | | |
|---|---|---|---|---|---|---|---|---|
| | | 4 | 5 | 6 | 6 | 7 | 8 | 9 |
| Rubber composition ingredients (parts by weight) | Natural rubber | – | – | – | 100 | 70 | 70 | 70 |
| | Modified natural rubber A | 100 | 70 | – | – | – | – | – |
| | Modified natural rubber B | – | – | 70 | – | – | – | – |
| | SBR | – | 30 | 30 | – | 30 | 30 | 30 |
| | Carbon black | 50 | 50 | 20 | 50 | 50 | 40 | 20 |
| | Silica | – | – | 30 | – | – | – | 30 |
| | Spindle oil | 12 | 12 | 12 | 12 | 12 | 12 | 12 |
| | Stearic acid | 1.5 | 1.5 | 1.5 | 1.5 | 1.5 | 1.5 | 15 |
| | Zinc oxide | 4 | 4 | 4 | 4 | 4 | 4 | 4 |
| | Vulcanization accelerator | 0.8 | 0.8 | 0.8 | 0.8 | 0.8 | 0.8 | 0.8 |
| | Sulfur | 3 | 3 | 3 | 3 | 3 | 3 | 3 |
| Evaluation results | $ML_{1+4}$ | 66 | 59 | 62 | 69 | 62 | 54 | 82 |
| | Ultimate strength (MPa) | 27 | 24 | 24 | 28 | 25 | 20 | 23 |
| | Crack growth resistance (index) | 103 | 100 | 96 | 105 | 100 | 82 | 65 |
| | tan δ (index) | 140 | 135 | 145 | 105 | 100 | 110 | 102 |
| | Rolling resistance (index) | 105 | 103 | 104 | 100 | 100 | 101 | 100 |

Table 2 indicates that following facts.
In Comparative Examples 6 to 9 composed of an existing natural rubber, increasing the amount of the natural rubber decreased the loss of the rubber composition, but little contributed to the rolling resistance of the tires. On the other hand, increasing the amount of the natural rubber increased ML thereby decreasing the productivity.

In Comparative Example 8, decreasing the amount of carbon black for the sake of achieving low loss properties also decreased the ultimate strength and crack growth resistance, which made it impossible to satisfy both of the low rolling resistance and durability.

In Comparative Example 9 in which carbon black was partially replaced with silica, the loss decreased, but the crack growth resistance significantly decreased, and the increase in the viscosity deteriorated the productivity.

In Examples 4 and 5 composed of a modified natural rubber, the loss of the rubber compositions decreased by 35% in comparison with Comparative Example 7, which resulted in 3% decrease in the rolling resistance of the tires. In addition, the durability was maintained.

In Example 6 in which carbon black had been partially replaced with silica, grafted alkoxysilane fortified the bonding between the natural rubber and silica, which resulted in the marked improvement in the durability in comparison with Comparative Example 9.

From these results, it is evident that the pneumatic tire of the present invention offers excellent durability and low rolling resistance.

The present invention is based on Japanese Patent Application No. 2004-346506 and Japanese Patent Application No. 2004-346507 each submitted on November 30, 2004, and the entirety of each of them is incorporated by reference.

**Claims**

1. A pneumatic tire in which at least one of a belt portion, a ply coating rubber, a squeegee rubber, and a tie rubber is composed of a rubber composition containing a modified natural rubber prepared by graft polymerizing a natural rubber latex with a polar group-containing monomer, and solidifying and drying the resulting product.

2. The pneumatic tire according to Claim 1, wherein at least one rubber selected from the group consisting of a belt coating rubber, belt end rubber, and inter-belt rubber of the belt portion is composed of the rubber composition.

3. The pneumatic tire according to Claim 1, wherein the ply coating rubber is composed of a rubber composition containing a modified natural rubber prepared by graft polymerizing a natural rubber latex with a polar group-containing monomer, and solidifying and drying the resulting product.

4. The pneumatic tire according to Claim 1, wherein the squeegee rubber is composed of a rubber composition containing a modified natural rubber prepared by graft polymerizing a natural rubber latex with a polar group-containing monomer, and solidifying and drying the resulting product.

5. The pneumatic tire according to Claim 1, wherein the tie rubber is composed of a rubber composition containing a modified natural rubber prepared by graft polymerizing a natural rubber latex with a polar group-containing monomer, and solidifying and drying the resulting product.

6. The pneumatic tire according to Claim 1, wherein the rubber composition contains the modified natural rubber in an amount of 10% by weight or more of the total rubber components.

7. The pneumatic tire according to Claim 1, wherein the rubber composition contains the modified natural rubber in an amount of 60 to 100% by weight of the total rubber components.

8. The pneumatic tire according to Claim 1, wherein the polar group is one or two or more selected from an amino group, an imino group, a nitrile group, an ammonium group, an imide group, an amide group, a hydrazo group, an azo group, a diazo group, a hydroxyl group, a carboxyl group, a carbonyl group, an epoxy group, an oxycarbonyl group, a sulfide group, a disulfide group, a sulfonyl group, a sulfinyl group, a thiocarbonyl group, a nitrogen-containing heterocyclic group, an oxygen-containing heterocyclic group, an alkoxysilyl group, and a tin-containing group.

9. The pneumatic tire according to Claim 1, wherein the graft content of the polar group-containing monomer is 0.01 to 5.0% by weight with reference to the rubber content of the natural rubber latex.

10. The pneumatic tire according to Claim 1, wherein the rubber composition contains carbon black.

11. The pneumatic tire according to Claim 10, wherein the rubber composition contains silica.

**12.** The pneumatic tire according to Claim 1, wherein the rubber composition further contains a natural rubber and/or a diene-based synthetic rubber.

**Amended claims under Art. 19.1 PCT**

**1.** A pneumatic tire in which at least one of a belt portion, a ply coating rubber, a squeegee rubber, and a tie rubber is composed of a rubber composition containing a modified natural rubber prepared by graft polymerizing a natural rubber latex with a polar group-containing monomer, and solidifying and drying the resulting product, wherein the graft content of the polar group-containing monomer is 0.01 to 5.0% by weight with reference to the rubber content of the natural rubber latex.

**2.** The pneumatic tire according to Claim 1, wherein at least one rubber selected from the group consisting of a belt coating rubber, belt end rubber, and inter-belt rubber of the belt portion is composed of the rubber composition.

**3.** The pneumatic tire according to Claim 1, wherein the ply coating rubber is composed of a rubber composition containing a modified natural rubber prepared by graft polymerizing a natural rubber latex with a polar group-containing monomer, and solidifying and drying the resulting product.

**4.** The pneumatic tire according to Claim 1, wherein the squeegee rubber is composed of a rubber composition containing a modified natural rubber prepared by graft polymerizing a natural rubber latex with a polar group-containing monomer, and solidifying and drying the resulting product.

**5.** The pneumatic tire according to Claim 1, wherein the tie rubber is composed of a rubber composition containing a modified natural rubber prepared by graft polymerizing a natural rubber latex with a polar group-containing monomer, and solidifying and drying the resulting product.

**6.** The pneumatic tire according to Claim 1, wherein the rubber composition contains the modified natural rubber in an amount of 10% by weight or more of the total rubber components.

**7.** The pneumatic tire according to Claim 1, wherein the rubber composition contains the modified natural rubber in an amount of 60 to 100% by weight of the total rubber components.

**8.** The pneumatic tire according to Claim 1, wherein the polar group is one or two or more selected from an amino group, an imino group, a nitrile group, an ammonium group, an imide group, an amide group, a hydrazo group, an azo group, a diazo group, a hydroxyl group, a carboxyl group, a carbonyl group, an epoxy group, an oxycarbonyl group, a sulfide group, a disulfide group, a sulfonyl group, a. sulfinyl group, a thiocarbonyl group, a nitrogen-containing heterocyclic group, an oxygen-containing heterocyclic group, an alkoxysilyl group, and a tin-containing group.

**9.** (deleted)

**10.** The pneumatic tire according to Claim 1, wherein the rubber composition contains carbon black.

**11.** The pneumatic tire according to Claim 10, wherein the rubber composition contains silica.

**12.** The pneumatic tire according to Claim 1, wherein the rubber composition further contains a natural rubber and/or a diene-based synthetic rubber.

## INTERNATIONAL SEARCH REPORT

| International application No. |
| --- |
| PCT/JP2005/021251 |

A. CLASSIFICATION OF SUBJECT MATTER
*B60C1/00*(2006.01), *C08L51/04*(2006.01), *C08L7/02*(2006.01)

According to International Patent Classification (IPC) or to both national classification and IPC

B. FIELDS SEARCHED

Minimum documentation searched (classification system followed by classification symbols)
B60C1/00, B60C9/04, B60C9/20, C08L7/02, C08L51/04, C08F253/00

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2000-26661 A (Societa Pneumatici Pirelli S.p.A.), 25 January, 2000 (25.01.00), Claims 8, 9, 13, 16, 17; Par. Nos. [0014], [0018], [0024]; Fig. 2 & US 6014998 A  & EP 964028 A1 & DE 69912354 T  & BR 9901798 A & TR 9901281 A  & ES 2210895 T | 1-12 |
| A | JP 63-203404 A (The Yokohama Rubber Co., Ltd.), 23 August, 1988 (23.08.88), Claims 1, 2; page 2, lower right column, line 14 to page 3, lower right column, line 8 (Family: none) | 1-12 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 06 February, 2006 (06.02.06) | 14 February, 2006 (14.02.06) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2005/021251 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 6-55665 A  (The Yokohama Rubber Co., Ltd.), 01 March, 1994 (01.03.94), Claim 1; Par. No. [0011] (Family: none) | 1-12 |
| A | JP 10-181305 A  (The Yokohama Rubber Co., Ltd.), 07 July, 1998 (07.07.98), Claim 1; Par. Nos. [0009], [0013] (Family: none) | 1-12 |
| A | JP 8-3368 A  (Ube Industries, Ltd.), 09 January, 1996 (09.01.96), Claim 1; Par. Nos. [0001], [0015], [0022] (Family: none) | 1-12 |
| A | JP 7-90007 A  (Sumitomo Rubber Industries, Ltd.), 04 April, 1995 (04.04.95), Claims 1, 5; Par. Nos. [0019], [0024], [0042] to [0045] (Family: none) | 1-12 |
| A | JP 2004-284375 A  (Bridgestone Corp.), 14 October, 2004 (14.10.04), Claims 1, 2 (Family: none) | 1-12 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004346506 A
- JP 2004346507 A